# EUROPEAN PATENT SPECIFICATION

(11) **EP 4 137 976 B1**
(45) Date of publication and mention of the grant of the patent: **19.03.2025**
(21) Application number: 20935194.9
(22) Date of filing: 15.05.2020
(51) Int. Cl.: G06F 21/56, G06F 21/55, G06F 21/44, G06F 21/57, H04L 9/40

(54) **LEARNING DEVICE, DETECTION DEVICE, LEARNING METHOD, DETECTION METHOD, LEARNING PROGRAM, AND DETECTION PROGRAM**
LERNVORRICHTUNG, DETEKTIONSVORRICHTUNG, LERNVERFAHREN, DETEKTIONSVERFAHREN, LERNPROGRAMM UND DETEKTIONSPROGRAMM
DISPOSITIF D'APPRENTISSAGE, DISPOSITIF DE DÉTECTION, PROCÉDÉ D'APPRENTISSAGE, PROCÉDÉ DE DÉTECTION, PROGRAMME D'APPRENTISSAGE ET PROGRAMME DE DÉTECTION

(43) Date of publication of application: 22.02.2023
(73) Proprietor: Nippon Telegraph And Telephone Corporation, Chiyoda-ku Tokyo 100-8116 (JP)
(72) Inventor: KOIDE, Takashi, Musashino-shi, Tokyo 180-8585 (JP); CHIBA, Daiki, Musashino-shi, Tokyo 180-8585 (JP)
(74) Representative: Hoffmann Eitle
(86) International application number: PCT/JP2020/019390
(87) International publication number: WO 2021/229786

(56) References cited:
- EP-A1- 3 599 753
- WO-A1-2017/217163
- JP-A- 2012 022 419
- JP-A- 2012 043 285
- US-A1- 2012 159 620
- US-A1- 2013 263 272
- US-A1- 2016 352 772
- US-B1- 8 631 498
- US-B1- 9 141 797
- MISU TAKESHI, SATO JUNKO, HANADA MASAKI, YAMAGUCHI TAKASHI, NUNOHIRO EIJI: "Proposal of malignant Website discovery system for security incident analysis support", PROCEEDINGS OF COMPUTER SECURITY SYMPOSIUM 2016, vol. 2016, 1 October 2016 (2016-10-01), pages 1240 - 1244, XP055873253
- GIANLUCA STRINGHINI ; CHRISTOPHER KRUEGEL ; GIOVANNI VIGNA: "Shady paths", COMPUTER & COMMUNICATIONS SECURITY, ACM, 2 PENN PLAZA, SUITE 701 NEW YORK NY 10121-0701 USA, 4 November 2013 (2013-11-04) - 8 November 2013 (2013-11-08), 2 Penn Plaza, Suite 701 New York NY 10121-0701 USA , pages 133 - 144, XP058034058, ISBN: 978-1-4503-2477-9, DOI: 10.1145/2508859.2516682

## Description

### Technical Field

The present invention relates to a learning apparatus, a detection apparatus, a learning method, a detection method, a learning program and a detection program.

### Background Art

In recent years, in some cases, attackers have used fake antivirus software to hack a user's terminal or steal personal information. Fake antivirus software is a kind of malware disguised as antivirus software that removes malware (generic term of malicious software) from a user's terminal. Conventionally, attackers make a false virus infection alert or a web advertisement that purports to provide speed-up of a terminal be displayed on a web page to psychologically lead a user to install fake antivirus software.

In addition to deceiving users using a false virus infection alert or web advertisement, in some other cases, attackers prepare a web page that presents a false virus removal method to urge a user to install fake antivirus software. Such web page is referred to as "false removal information presentation site". False removal information presentation sites are targeted for users who have already suffered security damage such as infection with malware or access to a malicious site. The false removal information presentation sites present a false method to cope with such security damage to deceive users. The false removal information presentation sites suggest installation of fake antivirus software and the deceived users download and install the fake antivirus software by himself/herself.

As an existing method for detecting a malicious web page for distributing fake antivirus software, for example, there is a method in which a malicious web page is detected via graph-based clustering using information on registration of domain names and information on networks such as IP addresses as features (see, for example, Non-Patent Literature 1). Malicious web pages to be detected by the method include a web page that makes an attack on a vulnerability existing in a user's system and a web page that displays a false infection alert to deceive a user.

Also, methods in which web pages are accessed using a web browser to extract characteristics particular to malicious web pages such as those for technical support frauds or survey frauds and identify such web pages have been known (see Non-Patent Literatures 2 and 3). Crawling of the identified malicious web pages through access using a web browser sometimes leads to a malicious web page that displays a false infection alert to distribute fake antivirus software.

Patent Literature 1 relates to a system for prevention of phishing attacks and more specifically for a phishing detection system featuring real time retrieval, analysis and assessment of phishing webpages. Patent Literature 2 relates to network monitoring and more particularly to techniques for identifying potential malware domain names.

### Citation List

### Patent Literature

Patent Literature 1: EP 3 599 753 A1
Patent Literature 2: US 8 631 498 B1
Patent Literature 3: US 9 141 797 B1

### Non-Patent Literature

Non-Patent Literature 1: M. Cova, C. Leita, O. Thonnard, A.D. Keromytis, M. Dacier, "An Analysis of Rogue AV Campaigns," Proc. Recent Advances in Intrusion Detection, RAID 2010, pp.442-463, 2010.
Non-Patent Literature 2: A. Kharraz, W. Robertson, and E. Kirda, "Surveylance: Automatically Detecting Online Survey Scams," Proc. - IEEE Symp. Secur. Priv., vol. 2018-May, pp.70-86, 2018.
Non-Patent Literature 3: B. Srinivasan, A. Kountouras, N. Miramirkhani, M. Alam, N. Nikiforakis, M. Antonakakis, and M. Ahamad, "Exposing Search and Advertisement Abuse Tactics and Infrastructure of Technical Support Scammers," Proceedings of the 2018 World Wide Web Conference on World Wide Web - WWW '18, pp. 319-328, 2018.

### Summary of the Invention

### Technical Problem

The aforementioned existing techniques are techniques that detect and efficiently collect malicious web pages making an attack on a vulnerability in a system to install fake antivirus software on a user's system or displaying a false infection alert to deceive a user into installing fake antivirus software by himself/herself. However, false removal information presentation sites that do not make an attack on a vulnerability in a system to install fake antivirus software but deceive a user into installation of fake antivirus software via a psychological leading approach.

Also, unlike the conventional methods in which a fake infection alert is displayed to deceive a user, the psychological leading approach is targeted for a user who has actually suffered security damage such as malware infection and presents a solution to such security damage to deceive the user. Therefore, from the perspective of method of attack, false removal information presentation sites are different from malicious web pages that the existing techniques tackle with, and thus, cannot be identified by the existing techniques that capture characteristics particular to the methods of attack by such malicious web pages to detect malicious web pages.

In other words, the conventional methods have the problem of being unable to detect a web page targeted for users who have suffered security damage, the web page presenting a solution to such damage to the users to urge the users to install fake antivirus software via a psychological leading approach.

The present invention has been made in view of the above and an object of the present invention is to detect a false removal information presentation site, using web page information acquired when a web page was accessed using a web browser, the false removal information presentation site being a malicious web page that presents false removal information to a user who has already suffered security damage to deceive the user into installation of fake antivirus software.

### Means for Solving the Problem

The present invention is defined by the independent claims. Preferred embodiments are defined by the dependent claims. Further aspects are provided for facilitating the understanding of the invention.

### Effects of the Invention

The present invention provides the effect of enabling detecting a false removal information presentation site that is a malicious web page urging installation of fake antivirus software.

### Brief Description of Drawings

[Fig. 1] Fig. 1 is a diagram illustrating an example of a configuration of a detection system according to an embodiment.
[Fig. 2] Fig. 2 is a diagram illustrating an example of a configuration of a learning apparatus illustrated in Fig. 1.
[Fig. 3] Fig. 3 is a diagram illustrating an example of a configuration of a detection apparatus illustrated in Fig. 1.
[Fig. 4] Fig. 4 is a diagram illustrating an example of web page information that can be acquired from a web browser when a web page is accessed using the web browser.
[Fig. 5] Fig. 5 is a diagram illustrating an example of communication log information that is a part of web page information.
[Fig. 6] Fig. 6 is a diagram illustrating examples of targets for which a word/phrase appearance frequency is measured.
[Fig. 7] Fig. 7 is a diagram illustrating examples of words and phrases for which a frequency of appearance is measured.
[Fig. 8] Fig. 8 is a diagram illustrating an example of a feature vector of word/phrase appearance frequencies.
[Fig. 9] Fig. 9 is a diagram illustrating an example of an image of a web page of a false removal information presentation site.
[Fig. 10] Fig. 10 is a diagram illustrating examples of categories of image data for which a frequency of appearance is measured.
[Fig. 11] Fig. 11 is a diagram illustrating an example of a feature vector of image appearance frequencies.
[Fig. 12] Fig. 12 is a diagram illustrating an example of a feature vector of HTML tag appearance frequencies.
[Fig. 13] Fig. 13 is a diagram illustrating an example of a feature vector of link destination URL appearance frequencies.
[Fig. 14] Fig. 14 is a diagram illustrating an example of a feature vector of communication destination URL appearance frequencies.
[Fig. 15] Fig. 15 is a diagram illustrating an example of a feature vector resulting from integration of features.
[Fig. 16] Fig. 16 is a diagram illustrating a flowchart of training model generation processing.
[Fig. 17] Fig. 17 is a diagram illustrating a flowchart of detection processing.
[Fig. 18] Fig. 18 is a diagram illustrating a computer that executes a program.

### Description of Embodiments

An embodiment of a learning apparatus, a detection apparatus, a learning method, a detection method, a learning program and a detection program according to the present application will be described in detail below with reference to the drawings. Note that the embodiment is not intended to limit the learning apparatus, the detection apparatus, the learning method, the detection method, the learning program and the detection program according to the present application.

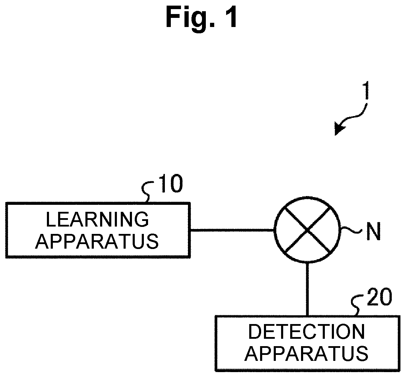

[Embodiment]An embodiment of the present invention will be described. Fig. 1 is a diagram illustrating an example of a configuration of a detection system according to the embodiment. As illustrated in Fig. 1, a detection system 1 according to the embodiment includes a learning apparatus 10 and a detection apparatus 20. The learning apparatus 10 generates a training model for detecting that a web page is a false removal information presentation site. More specifically, the learning apparatus 10 receives an input of information relating to a web page (hereinafter referred to as "web page information"), the web page information being acquired when accessing the web page using a web browser.

The learning apparatus 10 generates a training model using, as training data, any one feature or a plurality of features from among a word/phrase appearance frequency feature, an image appearance frequency feature, HTML features and a communication log feature, the features being extracted from the web page information.

The detection apparatus 20 receives the training model generated by the learning apparatus 10, and detects that a web page is a false removal information presentation site, using the training model. More specifically, the detection apparatus 20 receives an input of web page information acquired when a web page was accessed using a web browser. Using any one feature or a plurality of features from among a word/phrase appearance frequency feature, an image appearance frequency feature, HTML features and a communication log feature, the features being extracted from the web page information, as input data, the detection apparatus 20 inputs the input data to the training model learned in advance and detects that the web page is a false removal information presentation site, according to an output result of the training model.

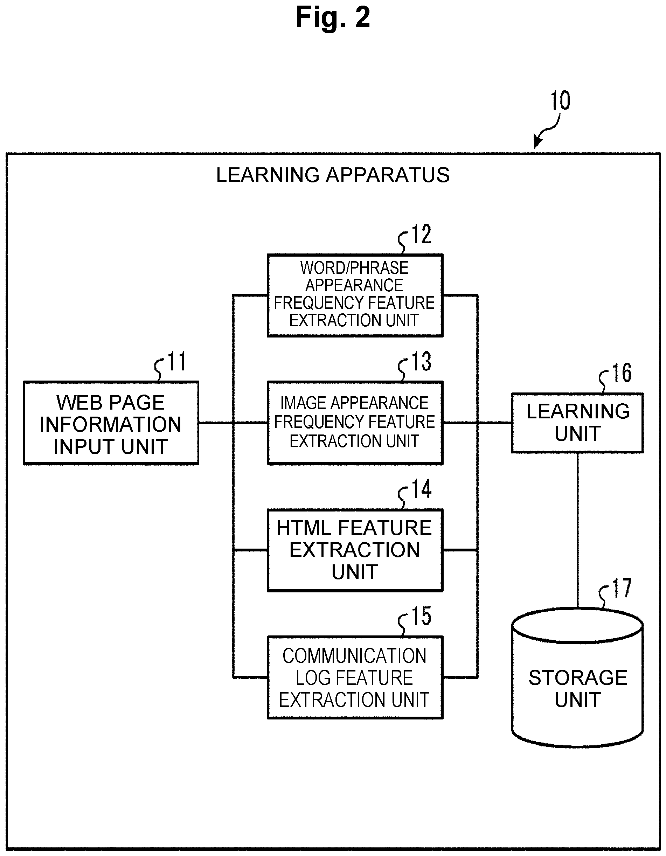

[Configurations of learning apparatus and detection apparatus] Next, a configuration of the learning apparatus 10 will be described. Fig. 2 is a diagram illustrating an example of a configuration of the learning apparatus illustrated in Fig. 1. The learning apparatus 10 includes a web page information input unit 11, a word/phrase appearance frequency feature extraction unit (first feature extraction unit) 12, an image appearance frequency feature extraction unit (second feature extraction unit) 13, an HTML feature extraction unit (third feature extraction unit) 14, a communication log feature extraction unit (fourth feature extraction unit) 15, a learning unit 16 and a storage unit 17.

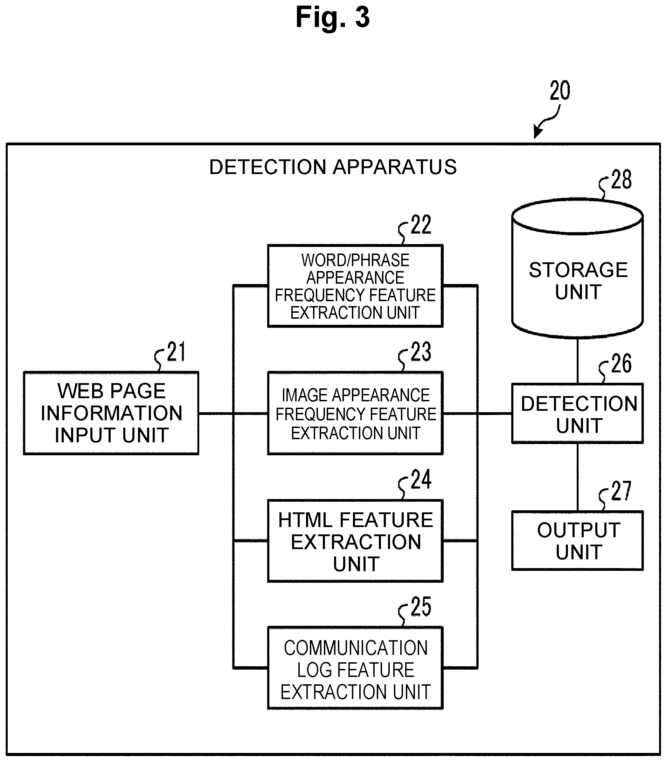

Next, a configuration of the detection apparatus 20 will be described. Fig. 3 is a diagram illustrating an example of a configuration of the detection apparatus illustrated in Fig. 1. The detection apparatus 20 includes a web page information input unit 21, a word/phrase appearance frequency feature extraction unit 22, an image appearance frequency feature extraction unit 23, an HTML feature extraction unit 24, a communication log feature extraction unit 25, a detection unit 26, an output unit 27 and a storage unit 28.

The respective units of the learning apparatus 10 will be described below. The web page information input unit 11 receives an input of information relating to a web page, whether or not the web page is a false removal information presentation site being known, the false removal information presentation site presenting a false virus removal method. More specifically, the web page information input unit 11 accesses a web page using a web browser and receives an input of web page information acquired from the web browser. For example, the web page information input unit 11 receives inputs of web page information pieces of a plurality of known false removal information presentation sites and web page information pieces of those other than the plurality of false removal information presentation sites. Here, web page information is information that can be acquired from a web browser when a web page is accessed using the web browser.

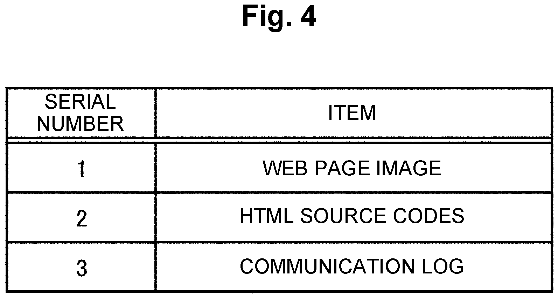

Web page information acquired by the web page information input unit 11 includes the items illustrated in Fig. 4. Fig. 4 is a diagram illustrating an example of web page information that can be acquired from a web browser when a web page is accessed using the web browser. In Fig. 4, examples of items included in web page information are illustrated. Examples of items of web page information include an image, an HTML source code and a communication log of a web page that have been acquired from a web browser when the web page was accessed using the web browser. The web page information can be acquired by managing the access of the web browser using, e.g., a browser extension introduced to the web browser or a debug tool for a developer of the web browser.

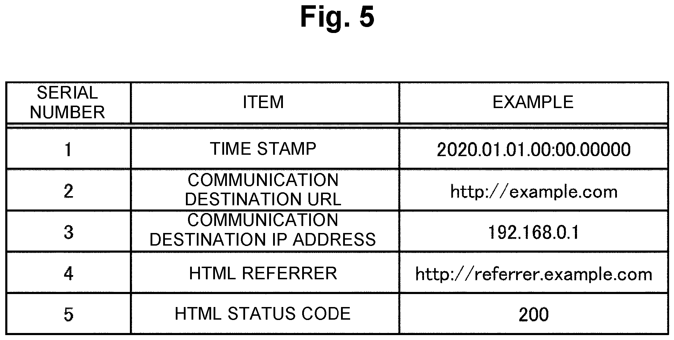

An example of a communication log of a web page will be described using the example in Fig. 5. Fig. 5 is a diagram illustrating an example of communication log information, which is a part of web page information. Examples of items of the communication log include a time stamp of a time of occurrence of a communication, a communication destination URL, a communication destination IP address, an HTML referrer representing a communication destination accessed immediately before and an HTML status code representing a content of HTML communication.

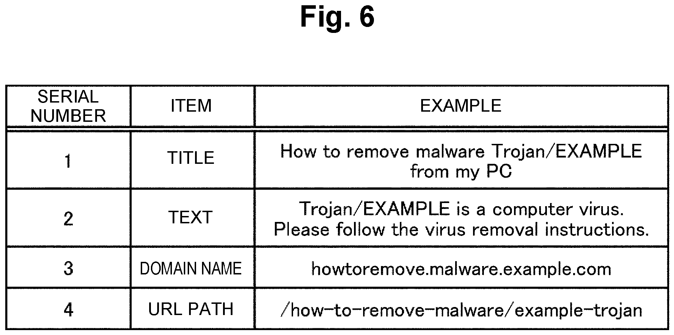

The word/phrase appearance frequency feature extraction unit 12 extracts communication destination information and text information from the web page information and measures the number of times a word or a phrase included in the communication destination information or the text information appear, as a word/phrase-related feature. In other words, with a view to capture linguistic characteristics particular to false removal information presentation sites, the linguistic characteristics being included in the web page information, the word/phrase appearance frequency feature extraction unit 12 measures a frequency of appearance of a word or a phrase as a feature of the web page, the feature being included in the web page information, and generates a feature vector. Examples of targets for measurement are illustrated in Fig. 6. Fig. 6 is a diagram illustrating examples of targets for which a word/phrase appearance frequency is measured.

As illustrated in Fig. 6, the word/phrase appearance frequency feature extraction unit 12 measures a frequency of appearance of words and phrases, for any one measurement target or each of a plurality of measurement targets from among a title, text, a domain name and a URL path. The word/phrase appearance frequency feature extraction unit 12 extracts a title and text displayed on a web page from HTML source codes of the web page. The title can be acquired by extracting a character string in a title tag. The text can be acquired by extracting character strings in respective HTML tags and excluding script tags each representing a JavaScript (registered trademark) source code to be processed by the web browser and character strings in meta tags each representing meta information of the web page.

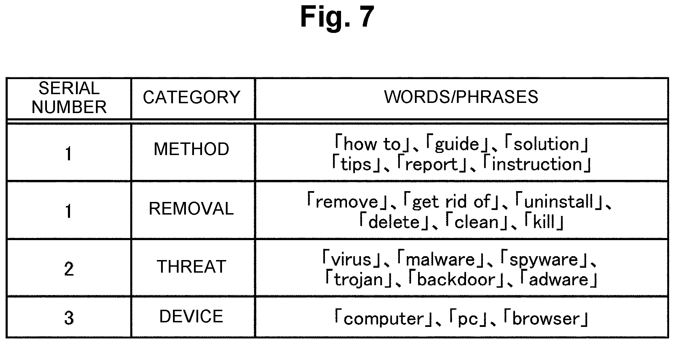

Also, the word/phrase appearance frequency feature extraction unit 12 acquires a communication destination URL from a communication log and acquires a domain name and a URL path from the communication destination URL. Words and phrases that are targets of appearance frequency measurement are set in advance for each of categories each including words and phrases having a same role. Fig. 7 is a diagram illustrating examples of words and phrases for which a frequency of appearance is measured. In the example in Fig. 7, examples of words and phrases and categories of the words and phrases are illustrated. The word/phrase appearance frequency feature extraction unit 12 extracts frequently appearing words and phrases, from known false removal information presentation sites, for any one category or each of a plurality of categories from among "method", "removal", "threat" and "device" in advance, and measures frequencies of appearance of the words and phrases for each category.

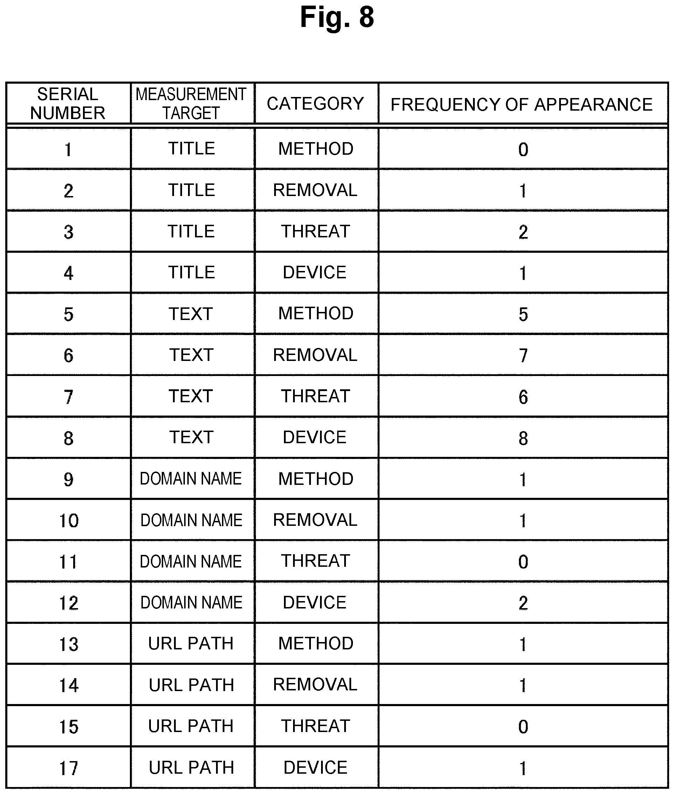

Fig. 8 illustrates an example of a feature vector of features extracted by the word/phrase appearance frequency feature extraction unit 12. Fig. 8 is a diagram illustrating an example of a feature vector of word/phrase appearance frequencies. For each measurement target, the word/phrase appearance frequency feature extraction unit 12 generates a feature vector by measuring a frequency of appearance of the words and phrases set for each category and vectorizing numerical values of the frequencies.

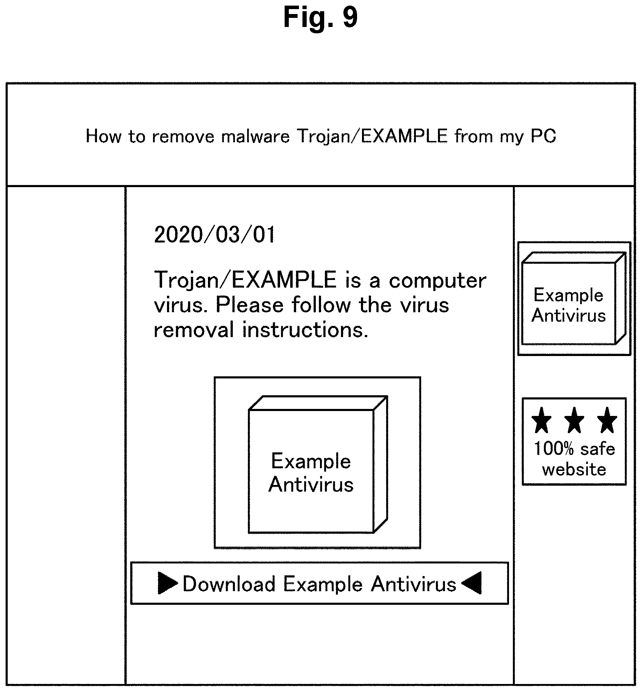

The image appearance frequency feature extraction unit 13 extracts image information from the web page information and measures the number of times an image included in the image information appears, as an image-related feature. In other words, with a view to capture image characteristics particular to false removal information presentation sites, the image characteristics being included in the web page information, the image appearance frequency feature extraction unit 13 measures a frequency of appearance of an image as a feature of the web page, the feature being included in the web page information, and generates a feature vector. The image appearance frequency feature extraction unit 13 measures a frequency of appearance of image data included within an image of the web page drawn by the web browser. An example of an image of a web page of a false removal information presentation site is illustrated in Fig. 9. Fig. 9 is a diagram illustrating an example of an image of a web page of a false removal information presentation site.

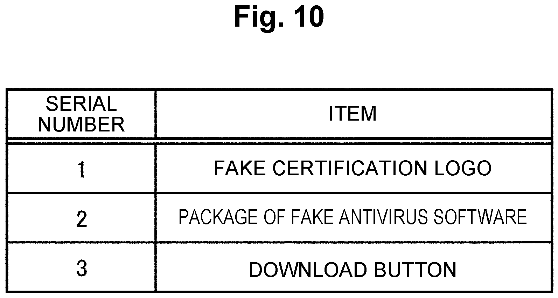

For the image data, an image that frequently appears in false removal information presentation sites is set in advance, for each of categories. Examples of the categories for the image data are illustrated in Fig. 10. Fig. 10 is a diagram illustrating examples of categories of image data for which a frequency of appearance is measured. The "fake certification logo" indicates a logo image of a security vendor company or an OS vendor company abused by a false removal information presentation site in order to assert safety of the web page.

The "package of fake antivirus software" indicates an image of a package of a fake antivirus software product. The "download button" indicates a download button for urging download of fake antivirus software. The image appearance frequency feature extraction unit 13 extracts image regions of HTML elements corresponding to an a tag or an img tag in the HTML source codes from the web page and measures a degree of similarity to image data set in advance. For a method for similarity degree measurement, an image hashing algorithm such as perceptual hash can be used.

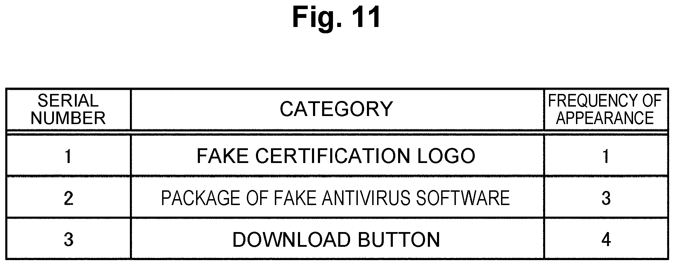

In Fig. 11, an example of a feature vector of features extracted by the image appearance frequency feature extraction unit 13 are illustrated. Fig. 11 is a diagram illustrating an example of a feature vector of image appearance frequencies. The image appearance frequency feature extraction unit 13 generates a feature vector by measuring a frequency of appearance of the relevant image for each of image data categories and vectorizing numerical values of the frequencies.

The HTML feature extraction unit 14 extracts HTML source code information from the web page information and measures the number of times a link destination appears and structure information that are included in the HTML information, as HTML source code-related features. In other words, with a view to capture HTML structural characteristics particular to false removal information presentation site, the structural characteristics being included in the web page information, the HTML feature extraction unit 14 measures a frequency of appearance of each of an HTML tag and a URL of a link destination as features of the web page, the features being included in the web page information, and generates respective feature vectors. The HTML feature extraction unit 14 measures a frequency of appearance of any one of or each of a plurality of HTML tags from among normally-used HTML tags from the HTML source codes.

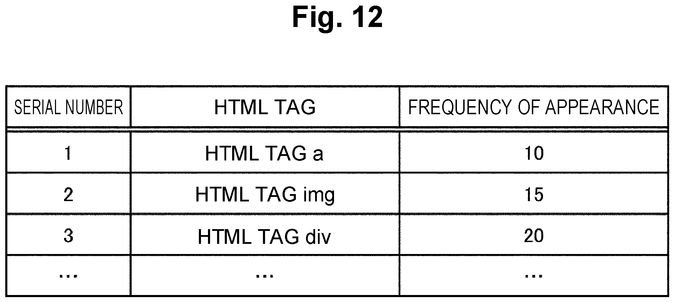

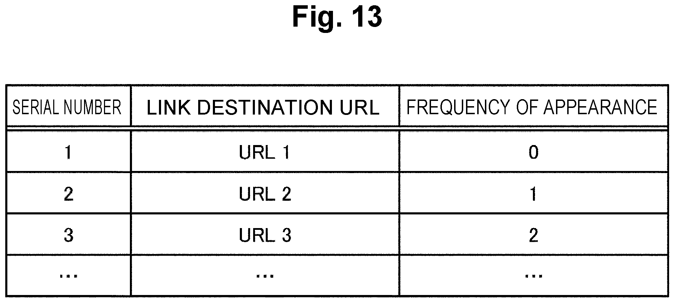

Also, the HTML feature extraction unit 14 measures a frequency of appearance of a URL of a link destination in the web page, the URL being included in an a tag. Link destination URLs of external sites frequently appearing in false removal information presentation sites are set in advance. In Fig. 12, an example of a feature vector of features of frequencies of appearance of HTML tags extracted by the HTML feature extraction unit 14 are illustrated. Fig. 12 is a diagram illustrating an example of a feature vector of HTML tag appearance frequencies. Also, in Fig. 13, an example of a feature vector of features of frequencies of appearance of link destination URLs extracted by the HTML feature extraction unit 14 is illustrated. Fig. 13 is a diagram illustrating an example of a feature vector of link destination URL appearance frequencies. The HTML feature extraction unit 14 generates a feature vector by measuring frequencies of appearance of HTML tags and frequencies of appearance of link destination URLs and vectorizing numerical values of the frequencies.

The communication log feature extraction unit 15 extracts communication log information from the web page information and measures the number of times a communication destination included in the communication log information appears, as a communication log-related feature. In other words, with a view to capture communication characteristics particular to false removal information presentation sites, the communication characteristics being included in the web page information, the communication log feature extraction unit 15 measures a frequency of appearance of a communication destination URL as a feature of the web page, the feature being included in the web page information, and generates a feature vector. The communication log feature extraction unit measures a frequency of appearance of a communication destination URL, from contents of communications with an external site from among communications occurred when the web page was accessed using the web browser. URLs of external sites frequently included in communications when false removal information presentation sites are accessed are set in advance.

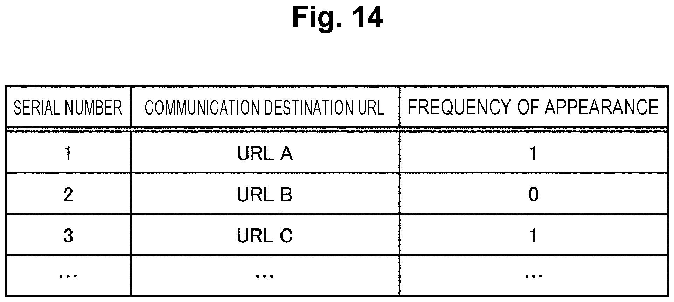

In Fig. 14, an example of a feature vector of features of frequencies of appearance of communication destination URLs, the features being extracted by the HTML feature extraction unit. Fig. 14 is a diagram illustrating an example of a feature vector of communication destination URL appearance frequencies. The communication log feature extraction unit 15 generates a feature vector by measuring frequencies of appearance of respective communication destination URLs and vectorizing numerical values of the frequencies.

The learning unit 16 generates a training model using, as training data, any one feature or a plurality of features from among the word/phrase-related feature, the image-related feature, the HTML source code-related feature and the communication log-related feature, the feature or the features being included in the information relating to the web page. For example, the learning unit 16 generates a training model using, as training data, a feature vector of any one feature or an integration of a plurality of features from among the word/phrase appearance frequency feature, the image appearance frequency feature, the HTML features and the communication log feature, which have been extracted from the web page information.

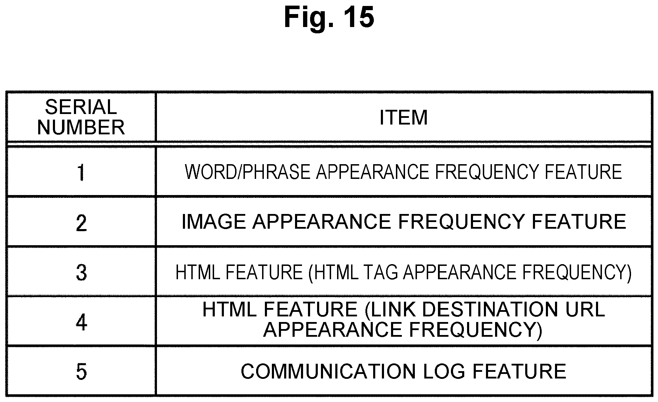

In Fig. 15, an example of training data resulting from integration of the word/phrase appearance frequency feature, the image appearance frequency feature, the HTML features and the communication log feature, which have been extracted from the web page information is illustrated. Fig. 15 is a diagram illustrating an example of a feature vector resulting from integration of the features. The learning unit 16 generates a training model using a supervised machine learning method in which two-class classification is possible, and stores the training model in the storage unit 17. Examples of the supervised machine learning method in which two-class classification is possible include, but are not limited to, a support-vector machine and a random forest. The learning unit 16 generates training data by extracting features from known false removal information presentation sites and other web pages, and generates a training model using the supervised machine learning method.

Next, the respective units of the detection apparatus 20 will be described below. Note that the web page information input unit 21, the word/phrase appearance frequency feature extraction unit 22, the image appearance frequency feature extraction unit 23, the HTML feature extraction unit 24 and the communication log feature extraction unit 25 perform processing that is similar to the above-described processing in the web page information input unit 11, the word/phrase appearance frequency feature extraction unit 12, the image appearance frequency feature extraction unit 13, the HTML feature extraction unit 14 and the communication log feature extraction unit 15, respectively, and thus, brief description will be provided with overlapping description omitted.

The web page information input unit 21 receives an input of information relating to a web page that is a detection target. More specifically, the web page information input unit 21 accesses a web page using a web browser and receives an input of web page information acquired from the web browser.

The word/phrase appearance frequency feature extraction unit 22 extracts communication destination information and text information from the web page information and measures the number of times a word or a phrase included in the communication destination information or the text information appears, as a word/phrase-related feature. The image appearance frequency feature extraction unit 23 extracts image information from the web page information and measures the number of times an image included in the image information appears, as an image-related feature.

The HTML feature extraction unit 24 extracts HTML source code information from the web page information and measures the number of times a link destination appears and structure information that are included in the HTML information, as HTML source code-related features. The communication log feature extraction unit 25 extracts communication log information from the web page information and measures the number of times a communication destination included in the communication log information appears, as a communication log-related feature.

Using any one feature or a plurality of features from among the word/phrase-related feature, the image-related feature, the HTML source code-related feature and the communication log-related feature, the feature or the features being included in the information relating to the web page, as input data, the detection unit 26 inputs the input data to a training model learned in advance, and detects that the detection target web page is a false removal information presentation site, according to an output result of the training model.

More specifically, the detection unit 26 reads a training model from the storage unit 28, and as with the learning unit 16, inputs input data to the training model learned in advance, using, as the input data, a feature vector extracted from the web page information, and detects that the web page is a false removal information presentation site, according to an output result of the training model. Note that the detection unit 26 not only determines that the detection target web page is a false removal information presentation site, but also may calculate a numerical value indicating a probability of the detection target web page being a false removal information presentation site, according to an output result of the training model.

The output unit 27 outputs a result of the detection by the detection unit 26. For example, the output unit 27 may output a message indicating that the detection target web page is a false removal information presentation site or may output a message indicating a probability of the detection target web page being a false removal information presentation site. Note that a mode of the output is not limited to messages and may be any of modes such as images and sounds.

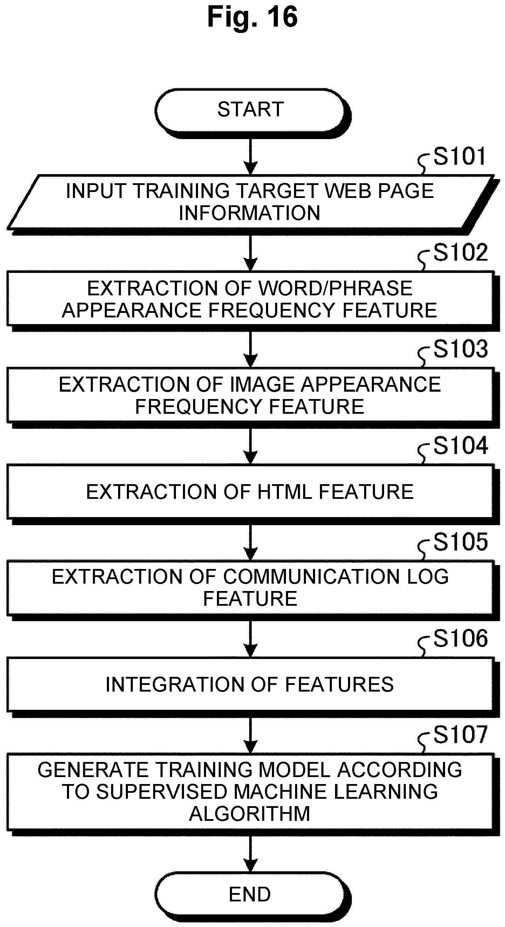

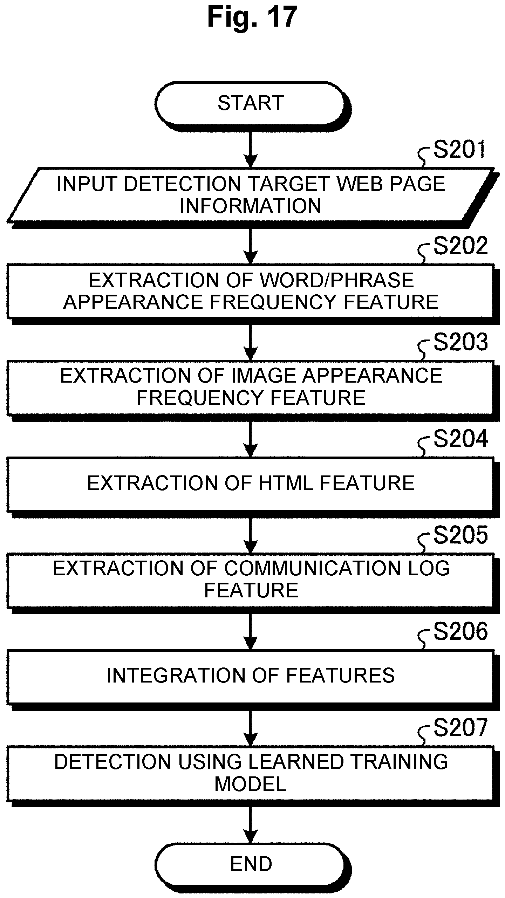

[Procedures of learning processing and detection processing] Next, procedures of learning processing and detection processing according to the embodiment will be described with reference to Figs. 16 and 17. Fig. 16 is a diagram illustrating a flowchart of training model generation processing. Fig. 17 is a diagram illustrating a flowchart of detection processing.

As illustrated in Fig. 16, the web page information input unit 11 of the learning apparatus 10 receives an input of web page information of a web page, whether or not the web page is a false removal information presentation site being known (step S101). Then, the word/phrase appearance frequency feature extraction unit 12 performs processing for extraction of a word/phrase appearance frequency feature (step S102). More specifically, the word/phrase appearance frequency feature extraction unit 12 performs processing for extracting communication destination information and text information from the web page information and measures the number of times a word or a phrase included in the communication destination information or the text information appears, as a word/phrase-related feature.

Subsequently, the image appearance frequency feature extraction unit 13 performs processing for extraction of an image appearance frequency feature (step S103). More specifically, the image appearance frequency feature extraction unit 13 extracts image information from the web page information and measures the number of times an image included in the image information appears, as an image-related feature. Then, the HTML feature extraction unit 14 performs processing for extraction of an HTML feature (step S104). More specifically, the HTML feature extraction unit 14 extracts HTML source code information from the web page information and measures the number of times a link destination appears and structure information that are included in the HTML information, as HTML source code-related features.

Subsequently, the communication log feature extraction unit 15 performs extraction of a communication log feature (step S105). More specifically, the communication log feature extraction unit 15 extracts communication log information from the web page information and measures the number of times a communication destination included in the communication log information appears, as a communication log-related feature. Subsequently, the learning unit 16 generates training data by integrating the respective features (step S106). Then, the learning unit 16 generates a training model according to a supervised machine learning method (step S107).

Also, as illustrated in Fig. 17, the web page information input unit 21 of the detection apparatus 20 receives an input of web page information of a web page that is a detection target (step S201). Then, the word/phrase appearance frequency feature extraction unit 22 performs processing for extraction of a word/phrase appearance frequency feature (step S202). More specifically, the word/phrase appearance frequency feature extraction unit 22 performs processing for extracting communication destination information and text information from the web page information and measures the number of times a word or a phrase included in the communication destination information or the text information appears, as a word/phrase-related feature.

Subsequently, the image appearance frequency feature extraction unit 23 performs processing for extraction of an image appearance frequency feature (step S203). More specifically, the image appearance frequency feature extraction unit 23 extracts image information from the web page information and measures the number of times an image included in the image information appears, as an image-related feature. Then, the HTML feature extraction unit 24 performs processing for extraction of an HTML feature (step S204). More specifically, the HTML feature extraction unit 24 extracts HTML source code information from the web page information and measures the number of times a link destination appears and structure information that are included in the HTML information, as HTML source code-related features.

Subsequently, the communication log feature extraction unit 25 performs extraction of a communication log feature (step S205). More specifically, the communication log feature extraction unit 25 extracts communication log information from the web page information and measures the number of times a communication destination included in the communication log information appears, as a communication log-related feature.

Then, the detection unit 26 generates input data by integrating the respective features (step S206). Subsequently, the detection unit 26 inputs the input data to a learned training model and detects that the web page is a false removal information presentation site (step S207).

[Effects of Embodiment] As above, the learning apparatus 10 according to the first embodiment receives an input of information relating to a web page, whether or not the web page is a false removal information presentation site being known, the false removal information presentation site presenting a false virus removal method, and generates a training model using, as training data, any one feature or a plurality of features from among a word/phrase-related feature, an image-related feature, an HTML source code-related feature and a communication log-related feature, the feature or the features being included in the information relating to the web page.

Also, the detection apparatus 20 receives an input of information relating to a web page, inputs input data to a training model learned in advance, using, as the input data, any one feature or a plurality of features from among a word/phrase-related feature, an image-related feature, an HTML source code-related feature and a communication log-related feature, the feature or the features being included in the information relating to the web page, and detects that the web page is a false removal information presentation site, according to an output result of the training model.

Therefore, the detection system 1 according to the embodiment captures characteristics particular to false removal information presentation sites from web page information acquired from a web browser by analyzing linguistic characteristics, image characteristics, HTML structural characteristics, link destination characteristics and communication destination characteristics, and thus enables highly accurate detection of a false removal information presentation site that cannot be detected by the conventional techniques.

In other words, the detection system 1 captures linguistic, image and HTML structure characteristics of a false removal information presentation site, using web page information acquired when a web page was accessed using a web browser, the false removal information presentation site being a malicious web page presenting a false coping method to a user who has already suffered security damage, from the perspective of psychological approach to the user and a system structure accompanying such psychological approach, and provides the effect of enabling detecting a false removal information presentation site from an input arbitrary web page.

[System Configuration, Etc.] Also, the components of the illustrated apparatuses are those based on functional concepts and do not necessarily need to be physically configured as illustrated in the figures. In other words, specific forms of distribution and integration in each of the apparatuses is not limited to those illustrated in the figures, and the specific forms can be fully or partly configured in such a manner as to be functionally or physically distributed or integrated in arbitrary units according to, e.g., various types of loads and/or use conditions. Furthermore, an entirety or an arbitrary part of each of processing functions executed in each of apparatuses can be implemented by a CPU and a program to be analyzed and executed by the CPU or can be implemented in the form of hardware using wired logic.

Also, from among the processes described in the present embodiment, those that have been described as being automatically performed can be fully or partly manually performed and those that have been described as being manually performed can be fully or partly automatically performed via a known method. In addition, the processing procedures, the control procedures, the specific names and information including various data and parameters included in the above description or the drawings can arbitrarily be changed except as specifically noted otherwise.

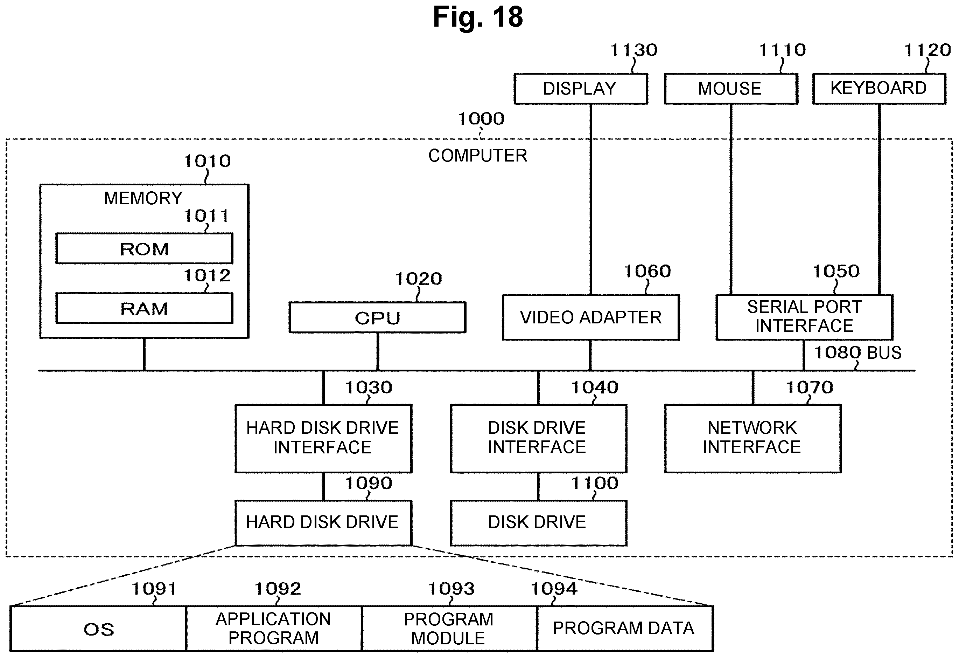

[Program] Fig. 18 is a diagram illustrating a computer that executes a program. Fig. 18 illustrates an example of a computer in which the learning apparatus 10 or the detection apparatus 20 is implemented by execution of a program. A computer 1000 includes, for example, a memory 1010 and a CPU 1020. The computer 1000 also includes a hard disk drive interface 1030, a disk drive interface 1040, a serial port interface 1050, a video adapter 1060 and a network interface 1070. These components are connected via a bus 1080.

The memory 1010 includes a ROM (read-only memory) 1011 and a RAM 1012. The ROM 1011 stores, for example, a boot program such as a BIOS (basic input/output system). The hard disk drive interface 1030 is connected to a hard disk drive 1090. The disk drive interface 1040 is connected to a disk drive 1100. For example, a removable storage medium such as a magnetic disk or an optical disk is inserted in the disk drive 1100. The serial port interface 1050 is connected to, for example, a mouse 1051 and a keyboard 1052. The video adapter 1060 is connected to, for example, a display 1061.

The hard disk drive 1090 stores, for example, an OS 1091, an application program 1092, a program module 1093 and program data 1094. In other words, programs prescribing the processes in the learning apparatus 10 or the detection apparatus 20 are implemented in the form of the program module 1093 in which computer executable codes are written. The program module 1093 is stored on, for example, the hard disk drive 1090. For example, a program module 1093 for executing processes that are similar to those performed by the functional components in the apparatus is stored on the hard disk drive 1090. Note that the hard disk drive 1090 may be substituted by an SSD (solid state drive).

Also, data used in the processes in the above-described embodiment are stored on, for example, the memory 1010 or the hard disk drive 1090 as the program data 1094. Then, the CPU 1020 reads the program module 1093 or the program data 1094 stored on the memory 1010 or the hard disk drive 1090 onto the RAM 1012 as necessary and executes the program module 1093 or the program data 1094.

Note that the program module 1093 and the program data 1094 are not limited to those in the case where the program module 1093 and the program data 1094 are stored on the hard disk drive 1090, and may be, for example, stored on a removable storage medium and read by the CPU 1020 via the disk drive 1100, etc. Alternatively, the program module 1093 and the program data 1094 may be stored in another computer connected via a network or a WAN. Then, the program module 1093 and the program data 1094 may be read from the other computer by the CPU 1020 via the network interface 1070.

### Reference Signs List

1 detection system
10 learning apparatus
11, 21 web page information input unit
12, 22 word/phrase appearance frequency feature extraction unit
13, 23 image appearance frequency feature extraction unit
14, 24 HTML feature extraction unit
15, 25 communication log feature extraction unit
16 learning unit
17, 28 storage unit
26 detection unit
27 output unit

## Claims

1. A detection system (1) including a detection apparatus (20) and a learning apparatus (10),
the learning apparatus (10) comprising:
a first input unit (11) configured to receive a first input of first information relating to a web page, whether or not the web page is a malicious site being known, the malicious site presenting a false virus removal method; and
a learning unit (16) configured to generate a training model using, as training data, any one feature or a plurality of features from among a word/phrase-related feature, an image-related feature, an HTML source code-related feature and a communication log-related feature, the feature or the features being included in the first information relating to the web page, and
the detection apparatus (20) comprising:
a second input unit (21) configured to receive a second input of second information relating to a web page; and
a detection unit (26) configured to input input data to the training model, using, as the input data, any one feature or a plurality of features from among a word/phrase-related feature, an image-related feature, an HTML source code-related feature and a communication log-related feature, the feature or the features being included in the second information relating to the web page, and detect that the web page is a malicious site presenting a false virus removal method, according to an output result of the training model.

2. The detection system (1) according to claim 1, wherein the learning apparatus (10) further includes a first feature extraction unit (12) configured to, as the word/phrase-related feature, extract communication destination information and text information from the first information relating to the web page and measure a number of times a word or a phrase included in the communication destination information or the text information appears.

3. The detection system (1) according to claim 1, wherein the learning apparatus (10) further includes a second feature extraction unit (13) configured to, as the image-related feature, extract image information from the first information relating to the web page and measure a number of times an image included in the image information appears.

4. The detection system (1) according to claim 1, wherein the learning apparatus (10) further includes a third feature extraction unit (14) configured to, as the HTML source code-related feature, extract HTML source code information from the first information relating to the web page and measure a number of times a link destination appears and structure information, the number of times and the structure information being included in HTML information.

5. The detection system (1) according to claim 1, wherein the learning apparatus (10) further includes a feature extraction unit (15) configured to, as the communication log-related feature, extract communication log information from the first information relating to the web page and measure a number of times a communication destination included in the communication log information appears.

6. A method comprising a detection method to be executed by a detection apparatus (20) and a learning method to be executed by a learning apparatus (10),
the learning method comprising:
an input step of receiving a first input of first information relating to a web page, whether or not the web page is a malicious site being known, the malicious site presenting a false virus removal method; and
a learning step of generating a training model using, as training data, any one feature or a plurality of features from among a word/phrase-related feature, an image-related feature, an HTML source code-related feature and a communication log-related feature, the feature or the features being included in the first information relating to the web page, and
the detection method comprising:
a second input step of receiving a second input of second information relating to a web page; and
a detection step of inputting input data to the training model, using, as the input data, any one feature or a plurality of features from among a word/phrase-related feature, an image-related feature, an HTML source code-related feature and a communication log-related feature, the feature or the features being included in the second information relating to the web page, and detecting that the web page is a malicious site presenting a false virus removal method, according to an output result of the training model.

7. A program comprising a detection program and a learning program,
the learning program causes a computer (1000) to execute a process comprising:
a first input step of receiving a first input of first information relating to a web page, whether or not the web page is a malicious site being known, the malicious site presenting a false virus removal method; and
a learning step of generating a training model using, as training data, any one feature or a plurality of features from among a word/phrase-related feature, an image-related feature, an HTML source code-related feature and a communication log-related feature, the feature or the features being included in the first information relating to the web page, and
the detection program causes the computer (100) to execute a process comprising:
a second input step of receiving a second input of second information relating to a web page; and
a detection step of inputting input data to the training model, using, as the input data, any one feature or a plurality of features from among a word/phrase-related feature, an image-related feature, an HTML source code-related feature and a communication log-related feature, the feature or the features being included in the second information relating to the web page, and detecting that the web page is a malicious site presenting a false virus removal method, according to an output result of the training model.

## Patentansprüche

1. Detektionssystem (1), das eine Detektionsvorrichtung (20) und eine Lernvorrichtung (10) einschließt,
wobei die Lernvorrichtung (10) umfasst:
eine erste Eingabeeinheit (11), die so konfiguriert ist, dass sie eine erste Eingabe von ersten Informationen in Bezug auf eine Webseite empfängt, wobei bekannt ist, ob es sich bei der Webseite um eine bösartige Seite handelt oder nicht, wobei die bösartige Seite ein falsches Virusentfernungsverfahren darstellt; und
eine Lerneinheit (16), die so konfiguriert ist, dass sie ein Trainingsmodell erzeugt, das als Trainingsdaten ein beliebiges Merkmal oder eine Vielzahl von Merkmalen aus einem wort-/satzbezogenen Merkmal, einem bildbezogenen Merkmal, einem HTML-Quellcode-bezogenen Merkmal und einem Kommunikationsprotokoll-bezogenen Merkmal verwendet, wobei das Merkmal oder die Merkmale in den ersten Informationen in Bezug auf die Webseite eingeschlossen ist/sind, und
wobei die Detektionsvorrichtung (20) umfasst:
eine zweite Eingabeeinheit (21), die so konfiguriert ist, dass sie eine zweite Eingabe von zweiten Informationen in Bezug auf eine Webseite empfängt; und
eine Detektionseinheit (26), die so konfiguriert ist, dass sie Eingabedaten in das Trainingsmodell eingibt, wobei als die Eingabedaten ein beliebiges Merkmal oder eine Vielzahl von Merkmalen aus einem wort-/satzbezogenen Merkmal, einem bildbezogenen Merkmal, einem HTML-Quellcode-bezogenen Merkmal und einem Kommunikationsprotokoll-bezogenen Merkmal verwendet wird, wobei das Merkmal oder die Merkmale in den zweiten Informationen in Bezug auf die Webseite eingeschlossen ist/sind, und detektiert, dass die Webseite eine bösartige Seite ist, die ein falsches Virusentfernungsverfahren darstellt, entsprechend einem Ausgabeergebnis des Trainingsmodells.

2. Detektionssystem (1) nach Anspruch 1, wobei die Lernvorrichtung (10) weiter eine erste Merkmalsextraktionseinheit (12) einschließt, die so konfiguriert ist, dass sie als das wort-/satzbezogene Merkmal Kommunikationszielinformationen und Textinformationen aus den ersten Informationen in Bezug auf die Webseite extrahiert und eine Anzahl von Malen misst, in denen ein Wort oder ein Satz, das/der in den Kommunikationszielinformationen oder den Textinformationen eingeschlossen ist, vorkommt.

3. Detektionssystem (1) nach Anspruch 1, wobei die Lernvorrichtung (10) weiter eine zweite Merkmalsextraktionseinheit (13) einschließt, die so konfiguriert ist, dass sie als das bildbezogene Merkmal Bildinformationen aus den ersten Informationen in Bezug auf die Webseite extrahiert und eine Anzahl von Malen misst, in denen ein in den Bildinformationen eingeschlossenes Bild vorkommt.

4. Detektionssystem (1) nach Anspruch 1, wobei die Lernvorrichtung (10) weiter eine dritte Merkmalsextraktionseinheit (14) einschließt, die so konfiguriert ist, dass sie als das HTML-Quellcode-bezogene Merkmal HTML-Quellcodeinformationen aus den ersten Informationen in Bezug auf die Webseite extrahiert und eine Anzahl von Malen misst, in denen ein Link-Ziel und Strukturinformationen vorkommen, wobei die Anzahl von Malen und die Strukturinformationen in HTML-Informationen eingeschlossen sind.

5. Detektionssystem (1) nach Anspruch 1, wobei die Lernvorrichtung (10) weiter eine Merkmalsextraktionseinheit (15) einschließt, die so konfiguriert ist, dass sie als das Kommunikationsprotokoll-bezogene Merkmal Kommunikationsprotokollinformationen aus den ersten Informationen in Bezug auf die Webseite extrahiert und eine Anzahl von Malen misst, in denen ein in den Kommunikationsprotokollinformationen eingeschlossenes Kommunikationsziel vorkommt.

6. Verfahren, das ein Detektionsverfahren umfasst, das von einer Detektionsvorrichtung (20) auszuführen ist, und ein Lernverfahren, das von einer Lernvorrichtung (10) auszuführen ist,
wobei das Lernverfahren umfasst:
einen Eingabeschritt zum Empfangen einer ersten Eingabe von ersten Informationen in Bezug auf eine Webseite, wobei bekannt ist, ob es sich bei der Webseite um eine bösartige Seite handelt oder nicht, wobei die bösartige Seite ein falsches Virusentfernungsverfahren darstellt; und
einen Lernschritt des Erzeugens eines Trainingsmodells unter Verwendung eines beliebigen Merkmals oder einer Vielzahl von Merkmalen aus einem wort-/satzbezogenen Merkmal, einem bildbezogenen Merkmal, einem HTML-Quellcode-bezogenen Merkmal und einem Kommunikationsprotokoll-bezogenen Merkmal als Trainingsdaten, wobei das Merkmal oder die Merkmale in den ersten Informationen in Bezug auf die Webseite eingeschlossen ist/sind, und
wobei das Detektionsverfahren umfasst:
einen zweiten Eingabeschritt zum Empfangen einer zweiten Eingabe von zweiten Informationen in Bezug auf eine Webseite; und
einen Detektionsschritt zum Eingeben von Eingabedaten in das Trainingsmodell, wobei als die Eingabedaten ein beliebiges Merkmal oder eine Vielzahl von Merkmalen aus einem wort-/satzbezogenen Merkmal, einem bildbezogenen Merkmal, einem HTML-Quellcode-bezogenen Merkmal und einem Kommunikationsprotokoll-bezogenen Merkmal verwendet wird, wobei das Merkmal oder die Merkmale in den zweiten Informationen in Bezug auf die Webseite eingeschlossen ist/sind, und Detektieren, dass die Webseite eine bösartige Seite ist, die ein falsches Virenentfernungsverfahren darstellt, entsprechend einem Ausgabeergebnis des Trainingsmodells.

7. Programm, das ein Detektionsprogramm und ein Lernprogramm umfasst,
wobei das Lernprogramm einen Computer (1000) veranlasst, einen Prozess auszuführen, der umfasst:
einen ersten Eingabeschritt zum Empfangen einer ersten Eingabe von ersten Informationen in Bezug auf eine Webseite, wobei bekannt ist, ob es sich bei der Webseite um eine bösartige Seite handelt oder nicht, wobei die bösartige Seite ein falsches Virusentfernungsverfahren darstellt; und
einen Lernschritt des Erzeugens eines Trainingsmodells unter Verwendung eines beliebigen Merkmals oder einer Vielzahl von Merkmalen aus einem wort-/satzbezogenen Merkmal, einem bildbezogenen Merkmal, einem HTML-Quellcode-bezogenen Merkmal und einem Kommunikationsprotokoll-bezogenen Merkmal als Trainingsdaten, wobei das Merkmal oder die Merkmale in den ersten Informationen in Bezug auf die Webseite eingeschlossen ist/sind, und
das Detektionsprogramm den Computer (100) veranlasst, einen Prozess auszuführen, umfassend:
einen zweiten Eingabeschritt zum Empfangen einer zweiten Eingabe von zweiten Informationen in Bezug auf eine Webseite; und
einen Detektionsschritt zum Eingeben von Eingabedaten in das Trainingsmodell, wobei als die Eingabedaten ein beliebiges Merkmal oder eine Vielzahl von Merkmalen aus einem wort-/satzbezogenen Merkmal, einem bildbezogenen Merkmal, einem HTML-Quellcode-bezogenen Merkmal und einem Kommunikationsprotokoll-bezogenen Merkmal verwendet wird, wobei das Merkmal oder die Merkmale in den zweiten Informationen in Bezug auf die Webseite eingeschlossen ist/sind, und Detektieren, dass die Webseite eine bösartige Seite ist, die ein falsches Virenentfernungsverfahren darstellt, entsprechend einem Ausgabeergebnis des Trainingsmodells.

## Revendications

1. Système (1) de détection incluant un appareil (20) de détection et un appareil (10) d'apprentissage,
l'appareil (10) d'apprentissage comprenant :
une première unité (11) d'entrée configurée pour recevoir une première entrée de premières informations relatives à une page Web, que la page Web soit ou non un site malveillant connu, le site malveillant présentant un procédé de suppression de faux virus ; et
une unité (16) d'apprentissage configurée pour générer un modèle d'entraînement utilisant, en tant que données d'entraînement, une caractéristique quelconque ou plusieurs caractéristiques parmi une caractéristique liée à un mot/une phrase, une caractéristique liée à une image, une caractéristique liée à un code source HTML et une caractéristique liée à un journal de communication, la ou les caractéristiques étant incluses dans les premières informations relatives à la page Web, et
l'appareil (20) de détection comprenant :
une seconde unité (21) d'entrée configurée pour recevoir une seconde entrée de secondes informations relatives à une page Web ; et
une unité (26) de détection configurée pour entrer des données d'entrée dans le modèle d'entraînement, en utilisant, comme données d'entrée, une caractéristique quelconque ou une pluralité de caractéristiques parmi une caractéristique liée à un mot/une phrase, une caractéristique liée à une image, une caractéristique liée à un code source HTML et une caractéristique liée à un journal de communication, la ou les caractéristiques incluses dans la seconde information relative à la page Web, et détecter que la page Web est un site malveillant présentant un procédé de suppression de faux virus, selon un résultat de sortie du modèle d'entraînement.

2. Système (1) de détection selon la revendication 1, dans lequel l'appareil (10) d'apprentissage inclut en outre une première unité (12) d'extraction de caractéristique configurée pour, en tant que la caractéristique liée au un mot/une phrase, extraire des informations de destination de communication et des informations textuelles à partir des premières informations relatives à la page Web et mesurer un nombre de fois où un mot ou une phrase inclus dans les informations de destination de communication ou les informations textuelles apparaissent.

3. Système (1) de détection selon la revendication 1, dans lequel l'appareil (10) d'apprentissage inclut en outre une deuxième unité (13) d'extraction de caractéristique configurée pour, en tant que la caractéristique liée à une image, extraire des informations d'image à partir des premières informations relatives à la page Web et mesurer un nombre de fois où une image incluse dans les informations d'image apparaît.

4. Système (1) de détection selon la revendication 1, dans lequel l'appareil (10) d'apprentissage inclut en outre une troisième unité (14) d'extraction de caractéristique configurée pour, en tant que la caractéristique liée à un code source HTML, extraire des informations de code source HTML à partir des premières informations relatives à la page Web et mesurer un nombre de fois où une destination de lien apparaît et des informations de structure, le nombre de fois et les informations de structure étant inclus dans les informations HTML.

5. Système (1) de détection selon la revendication 1, dans lequel l'appareil (10) d'apprentissage inclut en outre une unité (15) d'extraction de caractéristique configurée pour, en tant que la caractéristique liée à un journal de communication, extraire des informations de journal de communication à partir des premières informations relatives à la page Web et mesurer un nombre de fois où une destination de communication incluse dans les informations de journal de communication apparaît.

6. Procédé comprenant un procédé de détection à exécuter par un appareil (20) de détection et un procédé d'apprentissage à exécuter par un appareil (10) d'apprentissage,
le procédé d'apprentissage comprenant :
une étape d'entrée de réception d'une première entrée de premières informations relatives à une page Web, que la page Web soit ou non un site malveillant connu, le site malveillant présentant un procédé de suppression de faux virus ; et
une étape d'apprentissage de génération d'un modèle d'entraînement utilisant, en tant que données d'entraînement, une caractéristique quelconque ou plusieurs caractéristiques parmi une caractéristique liée à un mot/une phrase, une caractéristique liée à une image, une caractéristique liée à un code source HTML et une caractéristique liée à un journal de communication, la ou les caractéristiques étant incluses dans les premières informations relatives à la page Web, et
le procédé de détection comprenant :
une seconde étape d'entrée de réception d'une seconde entrée de secondes informations relatives à une page Web ; et
une étape de détection d'entrée de données d'entrée dans le modèle d'entraînement, en utilisant, comme données d'entrée, une caractéristique quelconque ou une pluralité de caractéristiques parmi une caractéristique liée à un mot/une phrase, une caractéristique liée à une image, une caractéristique liée à un code source HTML et une caractéristique liée à un journal de communication, la ou les fonctionnalités incluses dans la seconde information relative à la page Web, et la détection que la page Web est un site malveillant présentant un procédé de suppression de faux virus, selon un résultat de sortie du modèle d'entraînement.

7. Programme comprenant un programme de détection et un programme d'apprentissage,
le programme d'apprentissage amène un ordinateur (1000) à exécuter un processus comprenant :
une première étape de saisie de réception d'une première entrée de premières informations relatives à une page Web, que la page Web soit ou non un site malveillant connu, le site malveillant présentant un procédé de suppression de faux virus ; et
une étape d'apprentissage de génération d'un modèle d'entraînement utilisant, en tant que données d'entraînement, une caractéristique quelconque ou plusieurs caractéristiques parmi une caractéristique liée à un mot/une phrase, une caractéristique liée à une image, une caractéristique liée à un code source HTML et une caractéristique liée à un journal de communication, la ou les caractéristiques étant incluses dans les premières informations relatives à la page Web, et
le programme de détection amène l'ordinateur (100) à exécuter un processus comprenant :
une seconde étape d'entrée de réception d'une seconde entrée de secondes informations relatives à une page Web ; et
une étape de détection d'entrée de données d'entrée dans le modèle d'entraînement, en utilisant, comme données d'entrée, une caractéristique quelconque ou une pluralité de caractéristiques parmi une caractéristique liée à un mot/une phrase, une caractéristique liée à une image, une caractéristique liée à un code source HTML et une caractéristique liée à un journal de communication, la ou les fonctionnalités incluses dans la seconde information relative à la page Web, et la détection que la page Web est un site malveillant présentant un procédé de suppression de faux virus, selon un résultat de sortie du modèle d'entraînement.
